# EUROPEAN PATENT SPECIFICATION

(11) **EP 2 881 380 B1**
(45) Date of publication and mention of the grant of the patent: **09.02.2022**
(21) Application number: 12772343.5
(22) Date of filing: 30.07.2012
(51) Int. Cl.: C05G 3/00, C05D 3/02, C05D 5/00, C05F 11/10, C05G 5/30

(54) **BIOSTIMULATING AND ELICITING COMPOSITION FOR USE IN AGRICULTURE**
BIOSTIMULIERENDE UND AUSLÖSENDE ZUSAMMENSETZUNG FÜR LANDWIRTSCHAFTLICHE VERWENDUNG
COMPOSITION BIOSTIMULANTE ET ÉLICITRICE DESTINÉE À ÊTRE UTILISÉE EN AGRICULTURE

(43) Date of publication of application: 10.06.2015
(73) Proprietor: Blue Agro Bio Science S.L., 20009 San Sebastián (ES)
(72) Inventor: CENOZ IMAZ, Santiago, E-20009 San Sebastián (ES); EGUIA MENDIALDUA, Javier, E-20009 San Sebastián (ES)
(74) Representative: Carlos Hernando, Borja
(86) International application number: PCT/ES2012/070588
(87) International publication number: WO 2014/020187

(56) References cited:
- WO-A1-89/11462
- WO-A1-2012/085381
- FR-A1- 2 880 882
- FR-A1- 2 936 932
- FR-A5- 2 082 026
- US-A- 5 174 806
- US-A1- 2002 098 982
- US-B1- 6 241 795

## Description

### Technical Field of the Invention

The present invention relates to a fertilizer product with improved biostimulant and elicitor activity for agricultural use according to claim 1.

This product consists of granules, pellets or particles forming matrices from compounds of an animal or mineral origin, coated and impregnated with a formulation with a highly biostimulant and elicitor activity. The products of the present invention are particularly intended for crop fertilization as described in claim 13. A method for obtaining the fertiliser product according to claim 8 is also claimed.

### Background of the Invention

Fertilization and use of biostimulants in agriculture is increasingly more frequent because of the nutritional demand of high yield crops, where the objective is generally to make up for the nutritional requirements in critical times, to shorten or delay plant cycles and to induce specific phenological stages, in addition to counteract plant stress conditions, energy intake in productive stages or foliar nutrition for plant health purposes. In some cases the opportunity for applying this technology is fundamentally technical, and in others it is to hide integral crop nutrition inaccuracies or those due to an inadequate management of agronomical practices.

However, the negative impact that modern agriculture fertilization techniques may have on the environment is well known in the state of the art. Among others, soil destruction and salinization, pesticide and fertilizer pollution, deforestation or loss of genetic biodiversity are very important problems that must be dealt with.

Fertilizers and pesticides specifically must be used with extreme caution so that they do not cause problems. In many places in the world, the excessive use thereof causes water pollution when these products are entrained by rain. This pollution causes water eutrophication, death of fish and other animals and human health damage.

Groundwater pollution caused by such products is particularly difficult to solve. Many aquifers of agricultural areas have been polluted with nitrates up to a dangerous level for human health.

Therefore it would be desirable to provide a product for agricultural use that combines maximum crop yield with minimal environmental impact.

Said technical problem is solved through the present invention, which provides a fertilizer composition and/or product with elicitor capacity which produces the desired advantages as a result of the combined action between the selection of the active components of the product and the specific conformation thereof in the product.

Most fertilization techniques and products do not manage to combine advantageous effectiveness and application characteristics with a minimal environmental impact.

United States patent US6241795 describes a dry fertilizer comprising nitrogen, phosphorus and potassium compounds, micronutrients and vitamins, characterized by containing at least 10% by weight of phosphorus compounds and at least 10% by weight of potassium compounds, and about 5% to about 10% by weight of a growth enhancing mixture comprising vitamins and at least one component selected from growth promoters, amino acids, carbohydrates, polysaccharides and adjuvants. The composition may contain salicylic acid and algae extracts. The fertilizer described in this invention is dry and water-soluble, and is not in granule form.

European patent EP 1424891 relates to multi-layer adjuvants products for controlled delivery of agro-materials into plant tissues. The invention described in this patent document provides agro-material compositions and adjuvants that allow a controlled and lasting rate of penetration of the agro-materials into plant tissues. Among the possible product configurations described in the present invention, it is stated that the agro-materials form the core of the particles and the adjuvants form coatings of said cores.

US2012/0090367 describes a composition for agricultural use in the form of fertilizer particles coated with linear or branched aliphatic carboxylic acids.

ES 2229964 describes multi-layer adjuvants for the long-lasting controlled delivery of agro-materials into plant tissues based on an structural combination of agro-materials and adjuvant formulations which are in turn formed by a combination of lipophilic and hydrophilic active agents of the cuticle surface, wetting agents, thickeners and fatty self-emulsifying components.

Documents US2002098982 A, WO8911462 A, WO2012085381 A, US5174806 A and FR2082026 A also disclose the use of alginates as components of fertilisers.

In summary, there is a need in the state of the art to provide fertilizer, biostimulant and elicitor products in the form of a solid that is easy to apply, store and transport which combines the capacity of providing maximum crop yield with minimal environmental impact.

### Object of the Invention

The present invention relates to a new biostimulant and elicitor for agricultural use which combines maximum crop yield and minimal environmental impact. The use of the fertilizer product with biostimulant and elicitor activity reduces the fertilizer and phytosanitary unit doses while at the same time enhancing the growth of crops such as: grains (wheat, barley, oats, rye, rice and maize), industrial crops (beets, potatoes, cotton, sunflower, soybean, rapeseed and tobacco), legumes (beans, lentils, chickpeas and peas), forage crops (alfalfa and pastures), vegetables (cabbage, lettuce, watermelon, melon, cucumber, tomato, zucchini, eggplant, pepper, strawberry, broccoli, cauliflower, garlic, onion and carrot), flowers (roses and carnations), grass, citrus products (orange, tangerine and lemon trees), pip fruit trees (apple and pear trees), stone fruit trees (apricot, cherry, peach and plum trees), other fruit trees (banana, avocado, raspberry and kiwi), vine and olive trees, as well as enhancing the defense of crops against pathogens causing "soil fatigue" such as phytopathogenic fungi like *Phytophthora spp., Pythium spp., Fusarium spp., Verticilium spp., Rhizoctonia spp, Sclerotinia spp., Botrytis spp., Alternaria spp., Oidium spp.,* phytopathogenic bacteria such as *Agrobacterium spp., Pseudomonas spp., Erwinia spp.,* and phytopathogenic nematodes such as *Pratylenchus spp* and *Melydogine spp.*

For the purpose of the present invention, biostimulant activity is understood as activity that enhances plant growth by enlarging its root system.

For the purpose of the present invention, elicitor activity is understood as activity that enhances the natural defenses of the plant against pathogens.

The fertilizer product of the present invention is characterized by being a solid product made up of particles, pellets and/or granules, with a size distribution comprising at least 80% of particles, pellets or granules with a size between 2-5 mm in diameter, each particle, granule or pellet comprising a defined structure and configuration of ingredients that provide an intelligent, gradual and controlled release of the active ingredients into the crop.

In other words, the present invention provides the advantages of product application and effectiveness through the combined action of the size distribution of the particles forming the product along with the selective and ordered arrangement of the active ingredients therein.

The present invention provides a solid biostimulant fertilizer product consisting of a plurality of particles,granules and/or pellets, with a size distribution comprising at least 80% of particles, pellets or granules with a size between 2-5 mm in diameter,wherein each particle,granule or pellet is formed by a core or matrix that is coated or covered and impregnated with a film or layer, wherein such film or layer has the following composition: 20 - 40% algae extract from the species Ascophyllum nodosum; 10 - 60% water; 0 - 40% amino acids; 0 - 30% urea and 0 - 5% salicylic acid and the core or matrix is formed of a porous material of a mineral and/or animal nature, selected from the group consisting of: calcium carbonates and sulphates and/or mixtures thereof and products of a humic origin selected from peat and/or leonardite and/or mixtures thereof.

Also described is a fertilizer composition or product as defined in preceding sections which combines specific temperature and pH conditions which prevent the denaturation of the active principles during processing until obtaining the fertilizer product or composition of the present invention.

### Description of the Drawings

Figure 1 shows a graphical depiction of the activity assay illustrating the proportion of biomass of the aerial part compared to the control (without fertilizer) with respect to different compositions of the invention.
Figure 2 shows a graphical depiction of the activity assay illustrating the proportion of biomass of the root zone compared to the control (without fertilizer) with respect to different compositions of the invention.
Figure 3 shows a graphical depiction of the activity assay illustrating the proportion of total biomass (aerial part and root zone) compared to the control (without fertilizer) with respect to different compositions of the invention.
Figure 4 shows a graphical depiction of the activity assay illustrating the proportion of biomass of the aerial part compared to a conventional fertilizer complex N-P-K (15:15:15)

### Detailed Description of the Invention

As described above, the present invention provides a solid composition as described in claim 1, in the form of particles, granules and/or pellets, with a size distribution comprising at least 80% of particles, pellets or granules with a size between 2-5 mm in diameter, in which each particle, granule or pellet is formed by a core, also referred to as matrix for the purpose of the present invention, having a defined composition that is coated or covered and impregnated with a film or layer formed by a formulation or mixture of components or active ingredients with biostimulant and elicitor effect providing the particles, granules or pellets, and in summary the fertilizer composition or product with the advantages described above.

The particle size distribution forming the fertilizer composition plays an essential role in the effectiveness thereof because optimal activity effects will only occur if a specific proportion in the composition of specific particle size can be assured, this proportion being at least 80% of the total particles which must necessarily have a particle size between 2-5 mm in diameter. Based on these premise, it can be assured that at least 80% of the particles forming the composition are coated and impregnated in a substantially homogenous manner with the biostimulant and elicitor formulation, which is an essential feature so that the desired effect on activity of the present invention can take place.

The core or matrix forming the particles, granules or pellets has the following functionalities:
- Absorbing and/or retaining nutrients or substances of another type such as biostimulant substances that will be incorporated into the formulation.
- Maximizing nutrient movement in soil by means of cation exchange, replacing the exchangeable cations (such as sodium in sodic soils) or the mobilization of other cations retained in the clay-humus complex (as in the case of K⁺) increasing the availability of nutrients for assimilation through the roots.
- Increasing the activity of the soil microbial life by contributing to improving biological processes such as the conversion of organic matter or the assimilation of nitrogen minimizing risks of chlorosis.
- Modifying the chemical conditions of the soil, such as soil acidity reduction or soil pH modification.
- Increasing the growth of root hairs.

To that end, this matrix or core is formed from compounds of an animal or natural origin, or mixtures thereof and they are a support which incorporates, absorbs, fixes, adheres and/or retains the layer of active ingredients with the biostimulant and elicitor effect.

The matrix of the granule, particle or pellet has a granular structure and is porous. The material forming the matrix is of a mineral and/or animal nature. The use of natural calcium carbonates from mines or from a marine origin, the latter being obtained by micronization of calcareous algae, as well as products of a humic origin, such as peat and leonardites and/or mixtures thereof, is contemplated, among others. The matrix could therefore be formed by calcium carbonates, calcium sulfates or humic products and/or mixtures of calcium carbonates and/or calcium sulfates and humic products.

The possible components of the matrix include calcium magnesium carbonates, and/or calcium sulfates, which are particularly suitable for correctly soils with an acidic pH in particular. This is because the CaO they contain helps to increase the soil pH. The capacity of nutrient availability for plants is thereby increased, i.e., it increases the availability of elements locked in the soil due to an unfavorable pH. The incorporation of CaO in the soil further facilitates the mobilization of other elements such as potassium. Calcium ions (Ca⁺²) are larger than potassium ions (K⁺), so when calcium enters the solution of the soil, it favors the release of the K⁺ retained in the clay-humus complex, opening it and displacing the potassium of said complex towards the solution of the soil and therefore making it available for the plant. It additionally entails a supply of calcium in soils of geographical areas that are lacking this element due to high levels of rainfall.

Another added advantage of introducing CaO in the matrix is the stimulation of soil microbial life. A source of active calcium such as that provided by calcium carbonates in the matrix of the product of the present invention stimulates the general metabolism of heterotrophic organisms of the soil contributing to rapid mineralization of the organic matter.

Another important aspect derived from the use of calcium carbonates in the matrix of the product of the present invention is that it favors the microbial life of soil bacteria that are responsible for converting NH₄⁺ to NO₃, such as *Nitrosomonas, Nitrosolobus or Nitrospira,* for example, which require large amounts of calcium to favor the nitrification process.

Like calcium carbonate, natural calcium sulfate (CaSO₄) from mines supplies calcium to the soil with the advantages already described. However, it further provides sulfur (SO₃). Calcium sulfate is a natural chemical source where the calcium is bound to the sulfur. Wet climates and coarsely textured soils are subjected to leaching or a fast washout of sulfur. This is why the incorporation of sulfur in the matrix is advantageous because it is involved in many biochemical processes, such as the synthesis of proteins, chlorophylls, carotenes, organic acids, etc.

Calcium carbonates from calcareous marine algae provide an extra added value combined with the aforementioned benefits derived from the incorporation of calcium. These calcareous products from marine algae remains generally have a content of trace elements (Fe, Zn, B, Cu, Mn etc.) and other elements that earlier products do not have, whereby advantageously contributing to the fertilizing potential of the products of the present invention.

As discussed above, the use of humic substances selected from peat and leonardites and/or mixtures thereof in forming the matrix is contemplated. Humic substances are the result of organic matter degradation and decomposition processes (humification) which end by generating the compound known as humus. Humic substances include humic acids and fulvic acids. It can generally be affirmed that said humic substances have a common feature: the presence of negative charges making them true links for elements with a positive charge.

Humic substances are ideal for formulating and increasing the cation exchange capacity (CEC) of the matrix. Furthermore, under the biological viewpoint, humus acts as a support for multiple microorganisms and is the foundation for soil microbial activity, making the soil a living medium.

The present invention therefore contemplates preparing matrices comprising any of the components described above, the present invention specifically relates to fertilizer products in the form of granules, particles or pellets formed by a porous matrix of calcium carbonates, calcium sulfates or humic products selected from peat and/ or leonardite and/or mixtures of calcium carbonates and/or calcium sulfates and humic products selected from peat and/or leonardite and/or mixtures thereof.

Said matrices or cores can additionally incorporate fertilizer units or organic matters, such as NPK complexes which provide additional advantages in relation to the nitrogen - phosphorus and potassium balance, all of which are necessary depending on the specific problems detected in each soil.

For the purpose of the present invention, commercially available calcium carbonates and/or calcium sulfates in the form of granules can be used, including: products from the manufacturer SOLIDOR, Groupe Pilardiere, with the following commercial references: Perlitho^{®}, Perlitho+^{®}, Perlagro Glen+@, Perlagro Mag+^{®}, perlical Perlagro 9.3.6^{®}, Perlagro 4.3.3^{®}, Perlagro 13.4.2^{®}, Perlagro 4.8.10^{®}, Perlagro 0.6.12^{®}, Perlagro 0.10.15^{®}, Perlagro 0.15.0^{®}, Perlagro 0.12.10^{®}, Perlagro 0.0.25^{®}, all of said products being registered in ecological agriculture, or a powder product for forming the matrix using standard techniques, such as the Granucal^{®}, calcium magnesium carbonate of a marine origin.

Concerning the humic components forming the matrix, the following commercially available products in the form of granules or pellets can be used: Bitalorgan^{®}, Bitalkali^{®}, and Orgamol^{®}, etc., products registered in ecological agriculture by Fertigama S.L. The use of liquid humic acid such as LEONAR 15^{®}, by the manufacturer HEROGRA, is also contemplated for forming the matrix when granulating or pelletizing the matrix using Granucal^{®} as a base.

The particles, granules and/or pellets of the present invention formed by the matrix described above are coated or covered and impregnated with a film or layer formed by a formulation or mixture of components or active ingredients with a biostimulant and elicitor effect. The impregnation or coating of the particles, granules or pellets with the formulation with biostimulant and elicitor effect give the product of the present invention the advantages described above.

Once said formulation with biostimulant and elicitor effect is incorporated into the matrices, it forms a substantially homogenous layer or coating and impregnation on the surface of at least 80% of the particles forming the matrix.

The formulation incorporated into the matrices is based on aqueous solutions of algae extracts of marine origin, of the species Ascophyllum nodosum , additionally being able to contain concentrates of amino acids of an animal or plant origin, urea, as well as, optionally, salicylic acid. The following proportions are met (in % by weight): 20 - 40% algae extract; 10 - 60% water; 0 - 40% amino acids; 0 - 30% urea and 0 - 5% salicylic acid.

The extracts of a marine origin with biostimulant capacity to be used in the present invention are the species *Ascophyllum Nodosum,* belonging to the class of algae referred to as "red algae", such as for example the micronized product Algea Fert Solid K+^{®}, by the Norwegian company ALGEA.

The incorporation of the marine algae extracts into the matrix through the biostimulant formulation provides the product of the present invention with particularly advantageous properties because marine algae contain a high concentration of plant hormones enhancing plant growth, stimulating cell division and especially controlling abiotic stress. Specifically, marine algae provide a suitable concentration and balance of cytokines and auxins which maximize cell division, cell expansion, new formation of organs, tropism, flowering, etc.

It is also known that in addition to promoting cell elongation (auxins) and cell division (cytokinins), algae extracts are involved at a biochemical level, stimulating processes such as the synthesis of essential amino acids and proteins such as structural proteins, inducers of the self-defense system against stressful conditions due to salinity or drought, or plant physiological system regulators, among others. With the application of algae extracts that stimulate the synthesis of genes participating in the formation of proteins like those described above, it has been found that the mobilization of nutrients towards the plant is enhanced. Plant growth and crop yield are further increased because the determining factors of abiotic stress are controlled.

The advantages provided by incorporating the concentrates of amino acids of an animal and plant origin to the products of the present invention are due to the complexing properties of the latter with other cations, such as calcium, iron, etc., which aid in fixing, retaining the exchangeable cations and in preventing losses due to washout and leaching, thereby taking advantage of plant nutrition. The amino acids further serve as a source of energy for the soil microbial life, increasing it and improving the natural soil activity. Commercial products which can be used for the purpose of the present invention are, for example: Pepton 85/16^{®} marketed by the company APC EUROPE.

The incorporation of urea into the formulation provides N as an essential plant growth component. Commercial products which can be used for the purpose of the present invention are, for example: Urea 46% N^{®}, marketed by the company FERTIBERIA.

The advantage provided by the incorporation of salicylic acid into the product of the present invention is to provide a SAR (Systemic Activated Resistance) response in plants, which is a self-defense phenomenon capable of providing the plant with long-lasting protection against a wide range of pathogens including fungi, bacteria and viruses, and even in adverse abiotic situations such as saline or drought conditions.

The present invention therefore provides a method for crop fertilization comprising the application of the product of the present invention in effective doses, between 60 Kg - 350 Kg, preferably 75 Kg/ha, to the crop.

The fertilizer compositions of the present invention can optionally be applied together with NPK complexes (15:15:15) at doses of 100 to 350 Kg/Ha to enhance the fertilizer effects of the composition in the soils to be treated.

The method for obtaining the compositions and/or products of the present invention consists of the following phases or steps:
a) Preparing the liquid formulation with biostimulant and elicitor effect formed by a formulation or mixture of components or active ingredients based on algae extracts from the species Ascophyllum nodosum, wherein such film or layer has the following composition: 20 - 40% algae extract from the species Ascophyllum nodosum; 10 - 60% water; 0 - 40% amino acids; 0 - 30% urea and 0 - 5% salicylic acid.
b) Preparing the matrix or core of the particles, granules or pellets
c) Mixing phases a and b
d) Drying the mixture obtained in phase c) by means of a hot air flow.
e) Grain size selecting by sieving until obtaining at least 80% of the particles with a size between 2 and 5 mm.

The liquid formulation with biostimulant and elicitor effect is prepared from the mixture of the components forming the formulation: algae extracts of a marine origin, of the species Ascophyllum nodosum, additionally being able to contain concentrates of amino acids of an animal or plant origin, urea, as well as, optionally, salicylic acid. To make the solid mixture with biostimulant potential, at least the following four formulations or pre-mixtures explained below by way of example can be used, they are then dissolved to be applied on the matrix:
- Mixture 1: only comprises Algea Fert Solid K+^{®}, completely soluble micronized product.
- Mixture 2: comprises urea 46 in solid form (any industrial urea at a proportion of 20% by weight with respect to the total will do and the rest is Algea Fert Solid K+^{®}).
- Mixture 3: Pepton 85/16^{®} powder micronized amino acids of an animal origin at a proportion of 20% and 80% Algea Fert Solid K+^{®} are added.
- Mixture 4: Powder micronized salicylic acid at 3% by weight with respect to the total weight and 97% Algea Fert Solid K+^{®} are added.

Once the pre-mixture in solid form of the components is done, a dilution in water is performed, dissolving between 5 to 40%, more preferably between 10 to 20% of the pre-mixture in water until reaching 100% (% by weight with respect to the total weight). The pre-mixture is done by means of continuous stirring in a stainless steel reactor with sufficient capacity. The stirring time of the mixture depends on the stirring speed, it being important to completely dissolve the pre-mixture to be able to apply the product on the matrix without complications. For mixtures 2, 3 and 4 it is important that the pH does not go lower than 4 to prevent precipitation of the algae extract.

The matrix or core of the particles, granules or pellets is prepared from the mixture of already granulated commercial cores (SOLIDOR or FERTIGAMA products) or the matrix can be made using, for example, Granucal^{®} powder and LEONAR 15^{®}. To form the matrix starting from GRANUCAL^{®} and LEONAR 15^{®}, Granucal^{®} at a proportion of up to 90% is mixed in a rotary plate or granulator, with movement similar to that of a concrete mixer, where LEONAR 15^{®} is added up to 10% at most until forming granules. Granucal^{®} forms granules naturally upon rotating and adding LEONAR 15^{®}.

The phase of mixing the matrices or cores with the liquid formulation with biostimulant and elicitor effect takes place in a ribbon blender under specific operating conditions that allow incorporating the biostimulant and elicitor active ingredients in the form of coating on the cores or matrices, preventing degradation of the biostimulant active ingredients. The operating conditions for a ribbon blender of 3,000 kg are the following:
- amount of biostimulant mixture to be applied 5 kg (1 kg of pre-mixture +4 kg of water)
- checking that the pH of the mixture used as biostimulant and water does not go below 4 so that the algae neither precipitate nor disaggregate.
- rotation time of the ribbon blender and application of the biostimulant solution: 4 to 7 seconds, preferably 5 seconds, rotating the matrix and applying the biostimulant in liquid form. This amount of time is enough to impregnate the matrices and not break or disaggregate them.

Once the mixing process has been performed to assure subsequent caking reactions due to moisture of the product obtained the product is subjected to drying by means of a hot air flow not greater than 60°C, rendering the end product ready for packaging. The hot air temperature must not exceed 60 degrees Celsius to prevent the applied stimulants from sustaining any type of biochemical denaturation. The mixture of the biostimulant adheres to the matrix upon drying the mixture and caking reactions due to excess moisture in the product are prevented. The hot air flow application time must be the time necessary until obtaining a product with a moisture content not greater than 5%.

### Examples

### 1. Preparing MBC formulations

The commercial product Granucal^{®} in the form of granules is used to prepare the matrix. The different mixtures of biostimulants developed for this purpose are applied on Ganucal^{®} for preparing the MBC. Following the methodology described above, the following MBC formulations, detailed in the present example, were produced. The components of the different biostimulant formulations incorporated into each of the MBC compositions are expressed in % by weight of the total mixture of biostimulant applied in each case.

| | MBC1 | MBC2 | MBC3 | MBC4 | MBC5 |
|---|---|---|---|---|---|
| Algae extract | 40% | 20% | 20% | 20% | 30% |
| Amino acids | - | 20% | - | 20% | 30% |
| Urea | - | - | 20% | 20% | 30% |
| Salicylic acid | - | - | - | - | - |
| Water | 60% | 60% | 60% | 40% | 10% |

### 2. Evaluating the efficiency of different MBC product formulations with respect to a control formulation (without fertilizer)

For the purpose of evaluating the effect of the different MBC product formulations, wheat (*Triticum aestivum, L.*) of the Cezanne variety was sowed on 18 June 2010 in a greenhouse in 23 x 15 cm trays with a depth of 6 cm, at a proportion of 580 plants m⁻². The wheat was sowed in rows simulating the typical form of wheat crop fields. 850 g of dry ground soil sieved in a 2 mm sieve were used in each tray. Out of three soils that were previously selected due to their low nutrient content for conducting the test, the soil that had the most suitable pH for wheat sowing was chosen (Table 1). The two soils that were ruled out were acidic (pH 4.2 and 5.1) and therefore not recommended for the wheat crop.

**Table 1. Physicochemical properties of the soil selected for conducting the test.**

| | |
|---|---|
| *Sand* G,% | 3.09 |
| *Sand F,*% | 14.82 |
| *Silt,* % | 54.96 |
| *Clay,* % | 27.13 |
| *Classification* | Silty-loam-clay |
| pH | 7.01 |
| Organic matter, % | 2.75 |
| Nitrogen,% | 0.19 |
| Phosphorus, mg kg⁻¹ | 16.01 |
| Ca, meq 100g⁻¹ | 11.47 |
| Mg, meq 100 g⁻¹ | 0.75 |
| Potassium, mg kg⁻¹ | 84.00 |

K (NH₄AcO), P (Olsen, 1965), pH (1:2.5 soil:water), organic matter (Walkey, 1935).

A layer of gravel was placed in the base of the trays to facilitate drainage. Eleven different treatments were applied without repetitions (Table 2). A tray without fertilizer was used as a control and the MBC1, MBC2 and MBC5 formulations at a dose of 75 kg ha⁻¹ were used. Doses of 300 kg ha⁻¹ of the 15-15-15 complex together with a dose of 75 kg ha⁻¹ of the different formulations of the MBC product (MBC1-NPK1, MBC2-NPK1, MBC5-NPK1) were further applied. Finally, half the dose of the 15-15-15 fertilizer complex (150 kg ha⁻¹) were applied together with a dose of 75 kg ha⁻¹ of the different formulations of the MBC product (MBC1-NPK2, MBC2-NPK2, MBC5-NPK2).

**Table 2. Doses of fertilizer applied to each treatment (kg product ha⁻¹)**

| Treatments | NPK (15-15-15 ) | MBC1 | MBC2 | MBC5 |
|---|---|---|---|---|
| Control | - | - | - | - |
| MBC1 | - | 75 | - | - |
| MBC2 | - | - | 75 | - |
| MBC5 | - | - | - | 75 |
| MBC1-NPK1 | 300 | 75 | - | - |
| MBC2-NPK1 | 300 | - | 75 | - |
| MBC5-NPK1 | 300 | - | - | 75 |
| MBC1-NPK2 | 150 | 75 | - | - |
| MBC2-NPK2 | 150 | - | 75 | - |
| MBC5-NPK2 | 150 | - | - | 75 |

The fertilizer was mixed with the soil before placing the latter in the trays so that the distribution of the fertilizer was as homogenous as possible. A fine layer of perlite was then placed on top so that the surface did not dry out too much and form a crust preventing germination.

The test was performed in a greenhouse with temperature and radiation control for the purpose of preventing an excess of both radiation and temperature.

Shoot emergence of the first plants took place on 21 June. The plants were in phenological stage Z12 on 13 July 2010 as they had 2 leaves. Stem elongation, without tillering, started on 19 July. When the plants were in the stem elongation phase on 29 July 2010, the biomass of the aerial part and biomass of the roots were determined. To determine the biomass the aerial part was separated from all the plants of every tray to measure the dry matter production of the aerial part. Once the aerial part was removed from the plants, the soil adhered to the roots was removed with water under pressure to measure the biomass thereof.

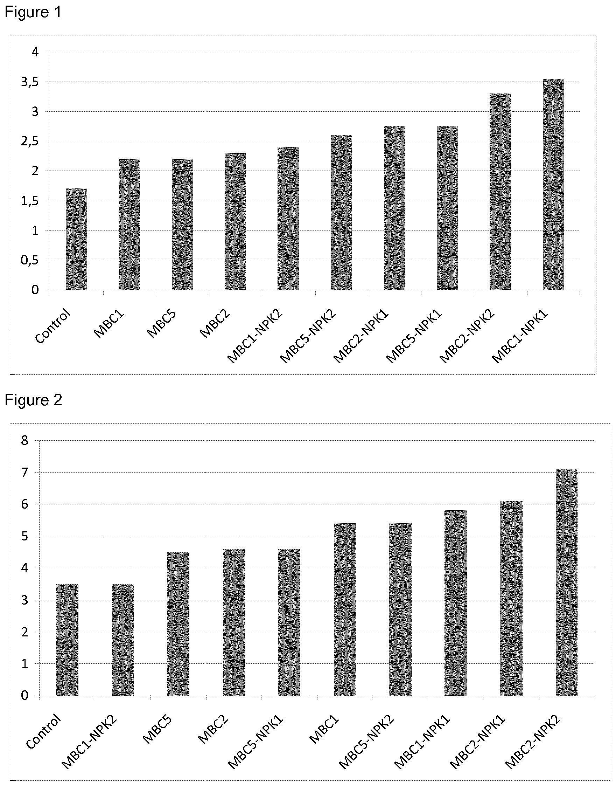

The results show that the treatments having the highest biomass of the aerial part are MBC1-NPK1, MBC2-NPK2 and MBC5-NPK1, respectively (Figure 1). The treatments with a lower biomass in the aerial part are the control treatment and the treatments with the MBC compound not complemented with a NPK complex (MBC1, MBC5, MBC2), as shown in Figure 1.

The biomass of the roots was higher for the MBC2 treatment with the two doses of NPK 15-15-15 complex, exceeding 6 g of dry matter (Figure 2) in both cases. The next treatment in terms of biomass of the roots was MBC1-NPK1, which had the highest biomass with respect to the aerial part. The treatment with the lowest root biomass was the control treatment.

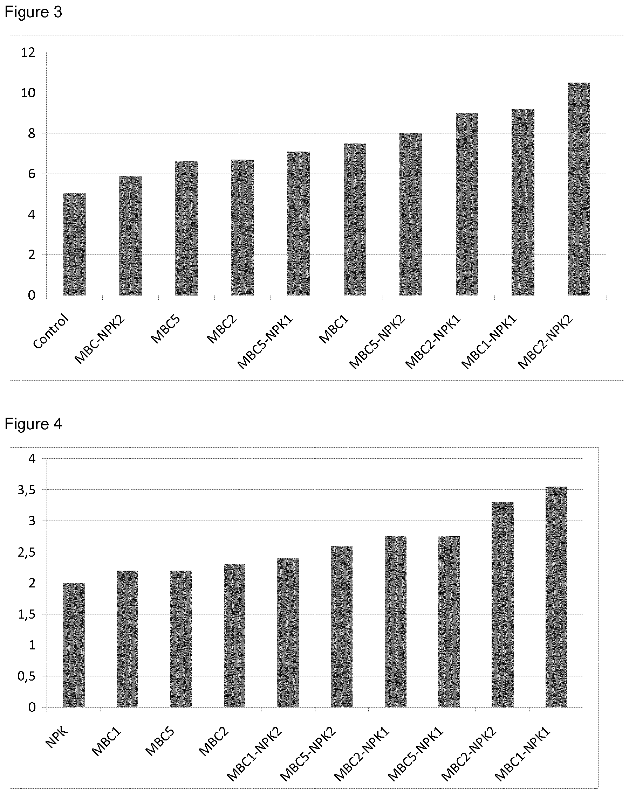

Generally, the treatments with the MBC product in their different formulations together with a NPK complex (15-15-15) have a higher total biomass (Figure 3). The treatment having the highest total biomass is MBC2-NPK2, followed by MBC1-NPK1 and MBC2-NPK1. The treatments having the lowest total biomass are the control treatment, MBC1-NPK2, and the MBC5 and MBC2 formulations without a complex with NPK (Figure 3). Nevertheless, the results undoubtedly demonstrate higher biomass values in both the aerial and root parts of the formulations of the present invention with respect to the control formulation.

The concentration of certain nutrients in the treatments carried out was also determined. Specifically, phosphorus, potassium and magnesium were measured in the aerial part of the samples, and nitrogen, phosphorus and potassium were measured in the root part of each of the treatments. For this purpose the Reuters method (1988) was used for to take the measurements.

Concerning the concentration of nutrients measured in the aerial part as illustrated in Table 3, the results show that the values of the formulations of the present invention are higher with respect to phosphorus, potassium and magnesium and they are also within what Reuters (1988) considers to be suitable except the control.

**Table 3: Concentration of nutrients in the aerial part**

| TREATMENTS | P (g kg⁻¹) M.S. | Mg (g kg⁻¹) M.S. | K (g kg⁻¹) M.S. |
|---|---|---|---|
| Control | 2.57 | 0.87 | 30.51 |
| MBC1 | 2.89 | 0.95 | 30.15 |
| MBC2 | 3.25 | 1.1 | 31.95 |
| MBC5 | 3.25 | 1.05 | 33.68 |
| MBC1-NPK1 | 4.29 | 1 | 38.41 |
| MBC2-NPK1 | 4.35 | 1.08 | 35.26 |
| MBC5-NPK1 | 5.42 | 1.12 | 43.52 |
| MBC1-NPK2 | 3.65 | 1.11 | 38.53 |
| MBC2-NPK2 | 4.16 | 1.08 | 36.11 |
| MBC5-NPK2 | 3.27 | 0.97 | 33.7 |

Enclosed Table 4 shows the values of nutrients measured in the root part. The results also show superiority of the formulations of the invention with respect to the values measured in the control.

**Table 4: Concentration of nutrients in the root part**

| TREATMENTS | N(g 100g⁻¹) M.S. | P (g kg⁻¹) M.S. | K (g kg⁻¹) M.S. |
|---|---|---|---|
| Control | 0.61 | 1.56 | 12.6 |
| MBC1 | 0.61 | 1.69 | 13.23 |
| MBC2 | 0.74 | 1.81 | 14.11 |
| MBC5 | 0.8 | 1.82 | 13.92 |
| MBC1-NPK1 | 0.94 | 2.01 | 14.45 |
| MBC2-NPK1 | 0.89 | 1.88 | 13.86 |
| MBC5-NPK1 | 1.14 | 2.27 | 7.39 |
| MBC1-NPK2 | 1.16 | 2.18 | 14.62 |
| MBC2-NPK2 | 0.71 | 1.69 | 12.2 |
| MBC5-NPK2 | 0.77 | 1.69 | 12.08 |

### 3.- Evaluation of the efficiency of different MBC product formulations with respect to a conventional N-P-K fertilizer formulation (15: 15:15)

For the purpose of being able to check the efficiency of the composition of the compositions of the present invention with respect to other conventional fertilizers, the same test as that conducted in section 2 above was repeated except the control composition (without fertilizer) was replaced with a NPK fertilizer complex (15-15-15) by Fertiberia.

The results as illustrated Figure 4 indicate a higher biomass of the aerial part in all those plants that had been treated with the compositions of the present invention with respect to the treatment with only the NPK fertilizer complex, the fertilizing and biostimulating superiority of the compositions of the present invention therefore being demonstrated.

## Claims

1. A solid biostimulant fertilizer product consisting of a plurality of particles, granules and/or pellets, with a size distribution comprising at least 80% of particles, pellets or granules with a size between 2-5 mm in diameter,wherein each particle, granule or pellet is formed by a core or matrix that is coated or covered and impregnated with a film or layer, wherein such film or layer has the following composition: 20 - 40% algae extract from the species *Ascophyllum nodosum*; 10 - 60% water; 0 - 40% amino acids; 0 - 30% urea and 0 - 5% salicylic acid and the core or matrix is formed of a porous material of a mineral and/or animal nature, selected from the group consisting of: calcium carbonates and sulfates and/or mixtures thereof and products of a humic origin selected from peat and/or leonardite and/or mixtures thereof.

2. The solid biostimulant fertilizer product according to claim 1, **characterized in that** the calcium carbonate forming the core or matrix is calcium magnesium carbonate.

3. The solid biostimulant fertilizer product of claim 2, wherein the core or matrix of calcium magnesium carbonate is coated with a composition consisting of 40% algae extract from the species *Ascophyllum nodosum* and 60% water.

4. The solid biostimulant fertilizer product of claim 2, wherein the core or matrix of calcium magnesium carbonate is coated with a composition consisting of 20% algae extract from the species *Ascophyllum nodosum,* 20% amino acids and 60% water.

5. The solid biostimulant fertilizer product of claim 2, wherein the core or matrix of calcium magnesium carbonate is coated with a composition consisting of 20% algae extract from the species *Ascophyllum nodosum,* 20% urea and 60% water.

6. The solid biostimulant fertilizer product of claim 2, wherein the core or matrix of calcium magnesium carbonate is coated with a composition consisting of 20% algae extract from the species *Ascophyllum nodosum,* 20% amino acids, 20% urea and 40% water.

7. The solid biostimulant fertilizer product of claim 2, wherein the core or matrix of calcium magnesium carbonate is coated with a composition consisting of 30% algae extract from the species *Ascophyllum nodosum,* 30% amino acids, 30% urea and 10% water.

8. A method for obtaining the product according to claims 1 to 2, comprising the following steps:
a) Preparing the liquid formulation with biostimulant and elicitor effect formed by a formulation or mixture of components or active ingredients based on algae extracts from the species *Ascophyllum nodosum,* wherein the said film or layer has the following composition: 20 - 40% algae extract from the species *Ascophyllum nodosum*; 10 - 60% water; 0 - 40% amino acids; 0 - 30% urea and 0-5% salicylic acid.
b) Preparing the matrix or core of the particles, granules or pellets.
c) Mixing phases a) and b).
d) Drying the mixture obtained in phase c) by means of a hot air flow.
e) Grain size selecting by sieving until obtaining at least 80% of the particles with a size between 2 and 5 mm.

9. The method according to claim 8 **characterized in that** in step a) the components of the biostimulant and elicitor formulation are pre-mixed in solid form and subsequently diluted in water by means of continuous stirring in a stainless steel reactor.

10. The method according to claims 8 and 9, **characterized in that** in step b) the components of the matrix or core of the particles, granules or pellets are mixed in a rotary plate and subsequently dried in a hot air flow.

11. The method according to claims 8 to 10, **characterized in that** in step c) phases a) and b) are mixed in a ribbon blender for 4 to 7 seconds.

12. The method according to claims 8 to 11, **characterized in that** in step d) the drying by means of hot air flow is maintained at a temperature not greater than 60°C until obtaining the product with a moisture content not greater than 5%.

13. A method for crop fertilization comprising applying the fertilizer product according to claims 1 and 2 in effective doses to the crop.

14. The method for crop fertilization according to claim 13, comprising applying the product according to claims 1 to 3 together with NPK complexes in effective doses to the crop.

## Patentansprüche

1. Festes biostimulierendes Düngemittelprodukt bestehend aus einer Vielzahl von Teilchen, Körnchen und/oder Pellets mit einer Größenverteilung, umfassend mindestens 80 % Teilchen, Pellets oder Körnchen mit einer Größe zwischen 2-5 mm Durchmesser, wobei jedes Teilchen, Körnchen oder Pellet durch einen Kern oder eine Matrix gebildet ist, die mit einem Film oder einer Schicht beschichtet oder bedeckt und imprägniert ist, wobei ein solcher Film oder eine solche Schicht die folgende Zusammensetzung aufweist: 20 - 40 % Algenextrakt der Spezies *Ascophyllum nodosum,* 10 - 60 % Wasser; 0 - 40 % Aminosäuren; 0 - 30 % Harnstoff und 0 - 5 % Salicylsäure und der Kern oder die Matrix aus einem porösen Material mineralischer und/oder tierischer Natur gebildet ist, ausgewählt aus der Gruppe bestehend aus: Calciumcarbonaten und -sulfaten und/oder Mischungen davon und Produkten humushaltigen Ursprungs, ausgewählt aus Torf und/oder Leonardit und/oder Mischungen davon.

2. Festes biostimulierendes Düngemittelprodukt nach Anspruch 1, **dadurch gekennzeichnet, dass** das den Kern oder die Matrix bildende Calciumcarbonat Calciummagnesiumcarbonat ist.

3. Festes biostimulierendes Düngemittelprodukt nach Anspruch 2, wobei der Kern oder die Matrix aus Calciummagnesiumcarbonat mit einer Zusammensetzung beschichtet ist, die aus 40 % Algenextrakt der Spezies *Ascophyllum nodosum* und 60 % Wasser besteht.

4. Festes biostimulierendes Düngemittelprodukt nach Anspruch 2, wobei der Kern oder die Matrix aus Calciummagnesiumcarbonat mit einer Zusammensetzung beschichtet ist, die aus 20 % Algenextrakt der Spezies *Ascophyllum nodosum,* 20 % Aminosäuren und 60 % Wasser besteht.

5. Festes biostimulierendes Düngemittelprodukt nach Anspruch 2, wobei der Kern oder die Matrix aus Calciummagnesiumcarbonat mit einer Zusammensetzung beschichtet ist, die aus 20 % Algenextrakt der Spezies *Ascophyllum nodosum,* 20 % Harnstoff und 60 % Wasser besteht.

6. Festes biostimulierendes Düngemittelprodukt nach Anspruch 2, wobei der Kern oder die Matrix aus Calciummagnesiumcarbonat mit einer Zusammensetzung beschichtet ist, die aus 20 % Algenextrakt der Spezies *Ascophyllum nodosum,* 20 % Aminosäuren, 20 % Harnstoff und 40 % Wasser besteht.

7. Festes biostimulierendes Düngemittelprodukt nach Anspruch 2, wobei der Kern oder die Matrix aus Calciummagnesiumcarbonat mit einer Zusammensetzung beschichtet ist, die aus 30 % Algenextrakt der Spezies *Ascophyllum nodosum,* 30 % Aminosäuren, 30 % Harnstoff und 10 % Wasser besteht.

8. Verfahren zum Erhalten des Produkts nach Anspruch 1 bis 2, umfassend die folgenden Schritte:
a) Herstellen der flüssigen Formulierung mit biostimulierender und Elicitor-Wirkung gebildet durch eine Formulierung oder Mischung von Komponenten oder Wirkstoffen auf Basis von Algenextrakten der Spezies *Ascophyllum nodosum,* wobei der Film oder die Schicht die folgende Zusammensetzung aufweist: 20 - 40 % Algenextrakt der Spezies *Ascophyllum nodosum;* 10 - 60 % Wasser; 0 - 40 % Aminosäuren; 0 - 30 % Harnstoff und 0 - 5 % Salicylsäure.
b) Herstellen der Matrix oder des Kerns der Teilchen, Körnchen oder Pellets.
c) Mischen von Phase a) und b).
d) Trocknen der in Phase c) erhaltenen Mischung mittels eines Heißluftstroms.
e) Auswählen der Korngröße durch Sieben, bis mindestens 80 % der Teilchen mit einer Größe zwischen 2 und 5 mm erhalten werden.

9. Verfahren nach Anspruch 8, **dadurch gekennzeichnet, dass** in Schritt a) die Komponenten der biostimulierenden und Elicitor-Formulierung in fester Form vorgemischt und anschließend in Wasser durch kontinuierliches Rühren in einem Edelstahlreaktor verdünnt werden.

10. Verfahren nach Anspruch 8 und 9, **dadurch gekennzeichnet, dass** in Schritt b) die Komponenten der Matrix oder des Kerns der Teilchen, Granulate oder Pellets in einem Drehteller gemischt und anschließend in einem Heißluftstrom getrocknet werden.

11. Verfahren nach Anspruch 8 bis 10, **dadurch gekennzeichnet, dass** in Schritt c) Phase a) und b) in einem Bandmischer 4 bis 7 Sekunden gemischt werden.

12. Verfahren nach Anspruch 8 bis 11, **dadurch gekennzeichnet, dass** in Schritt d) das Trocknen mittels Heißluftstrom bei einer Temperatur von nicht mehr als 60 °C gehalten wird, bis das Produkt mit einem Feuchtigkeitsgehalt von nicht mehr als 5 % erhalten wird.

13. Verfahren zur Kulturpflanzendüngung, umfassend das Auftragen des Düngemittelprodukts nach Anspruch 1 und 2 in wirksamen Dosen auf die Kulturpflanze.

14. Verfahren zur Pflanzendüngung nach Anspruch 13, umfassend das Aufbringen des Produkts nach Anspruch 1 bis 3 zusammen mit NPK-Komplexen in wirksamen Dosen auf die Kulturpflanze.

## Revendications

1. Produit de type engrais biostimulant solide constitué d'une pluralité de particules, de granulés et/ou de pellets, avec une distribution de la taille comprenant au moins 80 % de particules, pellets ou granulés avec une taille comprise entre 2 et 5 mm de diamètre, dans lequel chaque particule, granulé ou pellet est formé par un coeur ou une matrice qui est revêtu ou recouvert et imprégné d'un film ou d'une couche, dans lequel un tel film ou une telle couche a la composition suivante : 20-40 % d'extrait d'algues provenant de l'espèce *Ascophyllum nodosum,* 10-60 % d'eau ; 0-40% d'acides aminés; 0-30% d'urée et 0-5 % d'acide salicylique et le coeur ou la matrice est formé d'un matériau poreux de nature minérale et/ou animale, choisi dans le groupe composé de : carbonates et sulfates de calcium et/ou mélanges de ceux-ci et produits d'origine humique choisis parmi la tourbe et/ou la léonardite et/ou des mélanges de celles-ci.

2. Produit de type engrais biostimulant solide selon la revendication 1, **caractérisé en ce que** le carbonate de calcium formant le coeur ou la matrice est du carbonate de calcium et de magnésium.

3. Produit de type engrais biostimulant solide selon la revendication 2, dans lequel le coeur ou la matrice de carbonate de calcium et de magnésium est revêtu d'une composition constituée de 40 % d'extrait d'algues provenant de l'espèce *Ascophyllum nodosum* et 60 % d'eau.

4. Produit de type engrais biostimulant solide selon la revendication 2, dans lequel le coeur ou la matrice de carbonate de calcium et de magnésium est revêtu d'une composition constituée de 20 % d'extrait d'algues provenant de l'espèce *Ascophyllum nodosum,* 20 % d'acides aminés et 60 % d'eau.

5. Produit de type engrais biostimulant solide selon la revendication 2, dans lequel le coeur ou la matrice de carbonate de calcium et de magnésium est revêtu d'une composition constituée de 20 % d'extrait d'algues provenant de l'espèce *Ascophyllum nodosum,* 20 % d'urée et 60 % d'eau.

6. Produit de type engrais biostimulant solide selon la revendication 2, dans lequel le coeur ou la matrice de carbonate de calcium et de magnésium est revêtu d'une composition constituée de 20 % d'extrait d'algues provenant de l'espèce *Ascophyllum nodosum,* 20 % d'acides aminés, 20 % d'urée et 40 % d'eau.

7. Produit de type engrais biostimulant solide selon la revendication 2, dans lequel le coeur ou la matrice de carbonate de calcium et de magnésium est revêtu d'une composition constituée de 30 % d'extrait d'algues provenant de l'espèce *Ascophyllum nodosum,* 30 % d'acides aminés, 30 % d'urée et 10 % d'eau.

8. Procédé d'obtention du produit selon les revendications 1 à 2, comprenant les étapes suivantes :
a) la préparation de la formulation liquide à effet biostimulant et éliciteur formée par une formulation ou un mélange de composants ou d'ingrédients actifs à base d'extraits d'algues provenant de l'espèce *Ascophyllum nodosum,* dans lequel ledit film ou ladite couche a la composition suivante : 20-40 % d'extrait d'algues provenant de l'espèce *Ascophyllum nodosum ;* 10-60 % d'eau ; 0-40% d'acides aminés ; 0-30 % d'urée et 0-5 % d'acide salicylique.
b) la préparation de la matrice ou du coeur des particules, granulés ou pellets.
c) le mélange des phases a) et b).
d) le séchage du mélange obtenu à la phase c) au moyen d'un flux d'air chaud.
e) la sélection de la taille des grains par criblage jusqu'à l'obtention d'au moins 80 % des particules avec une taille comprise entre 2 et 5 mm.

9. Procédé selon la revendication 8 **caractérisé en ce qu'**à l'étape a) les composants de la formulation biostimulante et élicitrice sont prémélangés sous forme solide et par la suite dilués dans de l'eau au moyen d'une agitation continue dans un réacteur en acier inoxydable.

10. Procédé selon les revendications 8 et 9, **caractérisé en ce qu'**à l'étape b) les composants de la matrice ou du coeur des particules, granulés ou pellets sont mélangés dans un plateau rotatif et par la suite séchés dans un flux d'air chaud.

11. Procédé selon les revendications 8 à 10, **caractérisé en ce qu'**à l'étape c) les phases a) et b) sont mélangées dans un mélangeur à vis hélicoïdale pendant 4 à 7 secondes.

12. Procédé selon les revendications 8 à 11, **caractérisé en ce qu'**à l'étape d) le séchage au moyen d'un flux d'air chaud est maintenu à une température de pas plus de 60 °C jusqu'à l'obtention du produit avec une teneur en humidité de pas plus de 5 %.

13. Procédé de fertilisation d'une culture comprenant l'application du produit de type engrais selon les revendications 1 et 2 en doses efficaces sur la culture.

14. Procédé de fertilisation d'une culture selon la revendication 13, comprenant l'application du produit selon les revendications 1 à 3 conjointement avec des complexes NPK en doses efficaces sur la culture.
